# EUROPÄISCHE PATENTSCHRIFT

(11) **EP 1 465 789 B1**
(45) Veröffentlichungstag und Bekanntmachung des Hinweises auf die Patenterteilung: **16.04.2008**
(21) Anmeldenummer: 02796717.3
(22) Anmeldetag: 21.12.2002
(51) Int. Cl.: B60P 3/40, B60P 3/41, F03D 11/00, B64F 5/00

(54) **TRANSPORTFAHRZEUG FÜR ÜBERGROSSES STÜCKGUT**
TRANSPORT VEHICLE FOR OVERSIZED LOADS
VEHICULE DE TRANSPORT POUR CHARGES SURDIMENSIONÉES

(30) Priorität: 08.01.2002 DE 10200401
(43) Veröffentlichungstag der Anmeldung: 13.10.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/014700
(87) Internationale Veröffentlichungsnummer: WO 2003/057528

(56) Entgegenhaltungen:
- US-A- 2 335 692
- US-A- 2 725 241
- US-A- 4 750 785
- PATENT ABSTRACTS OF JAPAN vol. 2002, no. 06, 4. Juni 2002 (2002-06-04) & JP 2002 059776 A (NIPPON EXPRESS CO LTD), 26. Februar 2002 (2002-02-26)

## Beschreibung

Die Erfindung betrifft ein Transportfahrzeug gemäß dem oberbegriff von Anspruch 1, mit einer Zugmaschine und einem Nachläufer, wobei Zugmaschine und Nachläufer während des Stückguttransports durch das Stückgut selbst miteinander verbunden sind. Ein solches Fahrzeug ist aus der US 4750785 A bekannt.

Solche Transportfahrzeuge sind bereits seit längerem bekannt und insbesondere beim Transport von großen Röhren, beispielsweise Turmröhren von Windenergieanlagen im Einsatz.

Der Vorteil solcher Transportfahrzeuge, bestehend aus dem System Zugmaschine und Nachläufer besteht im Wesentlichen darin, dass mit vertretbarem Aufwand die äußeren Abmaße des gesamten Transports auf ein ausreichendes Maß eingehalten werden können, insbesondere kann vor allem die Transporthöhe so niedrig gehalten werden, dass regelmäßig ein Durchfahren von Unterführungen, Tunnel und Brücken und dergleichen möglich ist.

Aus DE 199 38 017 ist eine Vorrichtung zur Aufnahme übergroßen Ladegutes bekannt, wobei es sich hierbei um einen Tiefladeanhänger handelt, bei welchem falls notwendig und gewünscht das übergroße Ladegut aus einer horizontalen Lageposition in eine fast vertikale Lageposition verschwenkt werden kann.

Im Bereich der Windenergietechnik stoßen aber auch bisher bekannte Transportfahrzeugsysteme an ihre Grenzen, weil die äußeren Abmaße der baulichen Einheiten wie beispielsweise Turmsegmente, Rotorblätter usw. mittlerweile so groß geworden sind, dass der Einsatz solcher Transportsysteme nicht ohne weiteres mehr möglich ist. Es ist zwar auch schon vorgeschlagen worden, für den Transport großer und sperriger Lasten neu konzipierte Zeppelinfahrzeuge einzusetzen, allerdings ist der Transport mit solchen Systemen noch nicht getestet worden und es muss darüber hinaus mit solchen Systemen mit sehr hohen Transportkosten gerechnet werden.

Aufgabe der Erfindung ist es, ein Transportfahrzeug bereitzustellen, welches auch den Straßentransport von sehr sperrigen Gütern, insbesondere von solchen Gütern, die die übliche Profilhöhe von Unterführungen, Brücken (Autobahnüberbrückung usw.) übersteigen, ermöglicht.

Die Aufgabe wird mit einem Transportfahrzeug mit den Mitteln mit den Merkmalen nach Anspruch 1 gelöst. Vorteilhafte Weiterbildung sind in den Unteransprüchen beschrieben.

Besonders geeignet ist das erfindungsgemäße Transportfahrzeug für den Transport von großen Rotorblättern geeignet, die über eine Länge von mehr als 40 Meter und eine maximale Breite von mehr als 5 Meter verfügen.

Diese große Transportbreite bedeutet im Normalfall, dass mit einem solchen Transport auch das normale Fahrbahnprofil hinsichtlich der Breite eines Fahrstreifens einer Autobahn überschritten wird. Das Rotorblatt sollte daher also auch in "aufrechter" Position transportiert werden, so dass also die maximale Breite des Rotorblattes die maximale Höhe des gesamten Transports darstellt. Wenn nun ein solcher Transport eine Autobahnüberführung durchfahren muss, kann es aber vorkommen, dass die Transporthöhe zu groß ist und normalerweise eine Durchfahrt der Autobahnüberbrückung (die Höhe liegt regelmäßig bei 4m oder 5m) unmöglich ist.

Durch Verdrehen des gesamten Rotorblattes vor der Durchfahrt der Autobahnüberbrückung wird es so auf die "Seite" gelegt, dass das Rotorblatt mit seiner breitesten Stelle nun nicht mehr lotrecht steht, sondern um etwa 90° seitlich gelegt ist, so dass das Durchfahren eine Autobahnüberbrückung nunmehr möglich ist. Nach der Durchfahrung der Autobahnüberbrückung kann mittels der Drehvorrichtung das Rotorblatt wiederum in seine vorherige Position verdreht werden, so dass auch der Verkehr auf der weiteren Autobahnspur nicht mehr behindert wird, was während der Durchfahrung der Autobahnüberbrückung durchaus möglich ist.

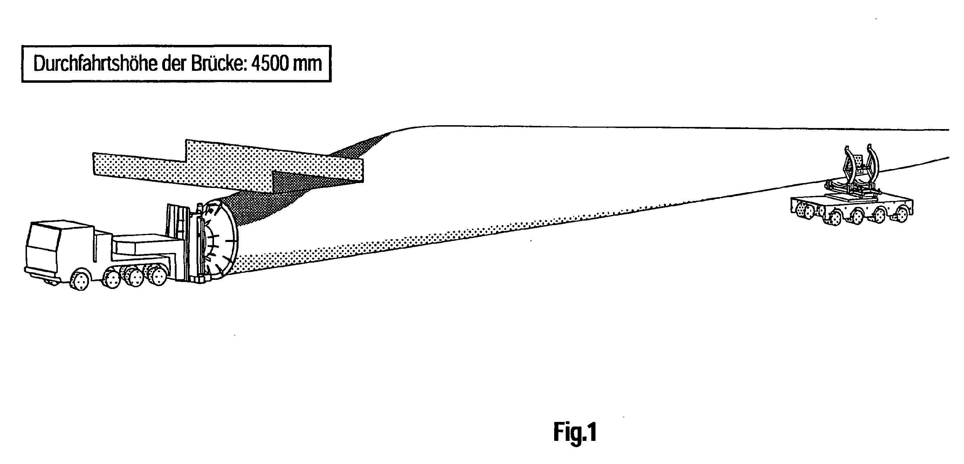

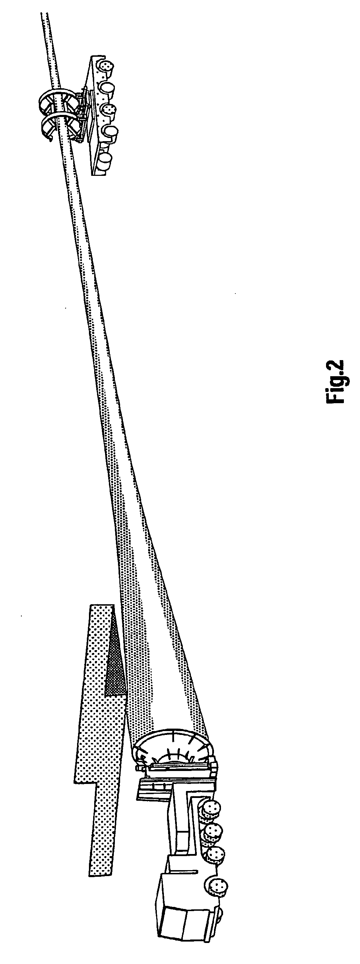

Die Figur 1 zeigt den Transport mittels des erfindungsgemäßen Transportfahrzeugs für ein Rotorblatt, wobei das Rotorblatt mit seiner breitesten Stelle (diese beträgt z.B. 6 Meter oder mehr) in der Aufrechtposition transportiert wird. Bei Erreichen einer Autobahnüberbrückung wird nunmehr das gesamte Rotorblatt um etwa 90° gedreht - Fig. 2 - so dass das Durchfahren der Autobahnüberbrückung möglich ist.

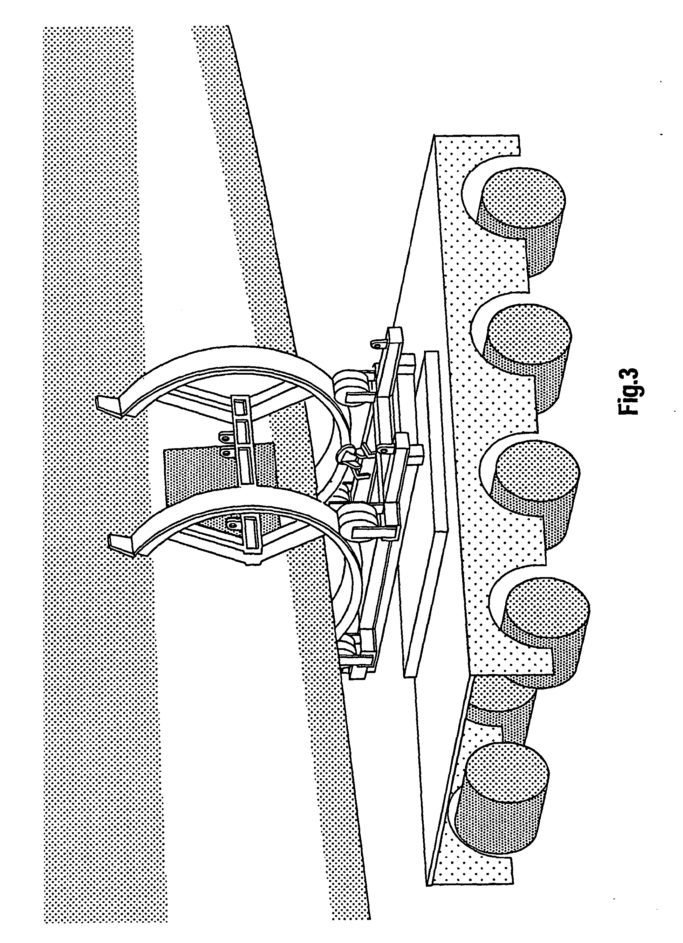

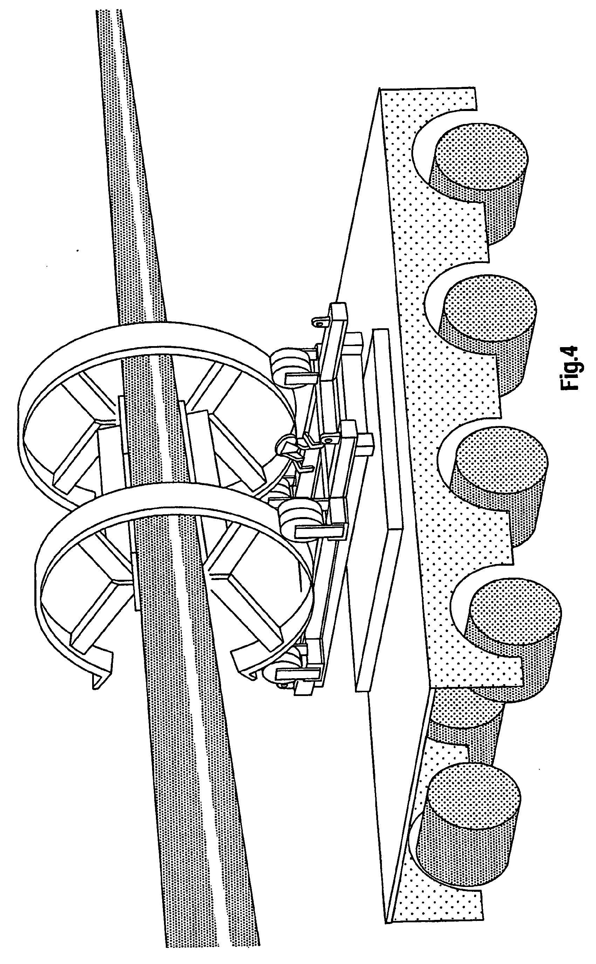

Figur 3 zeigt die Stellung der Rotorblatthaltevorrichtung des Nachläufers vor der Verdrehung des Rotorblattes, Figur 4 zeigt die Stellung des Rotorblattes nach der Verdrehung.

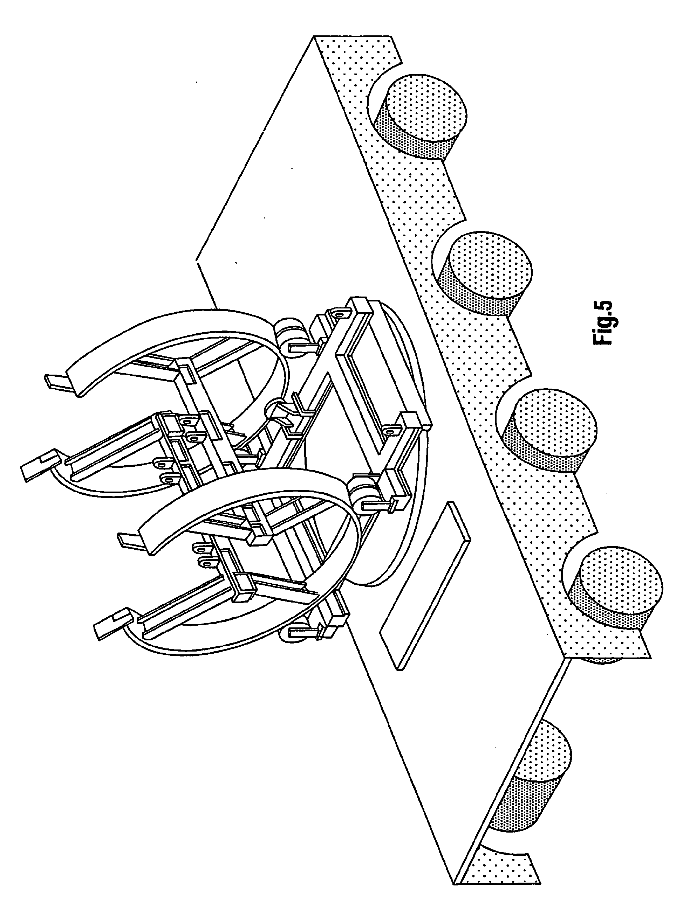

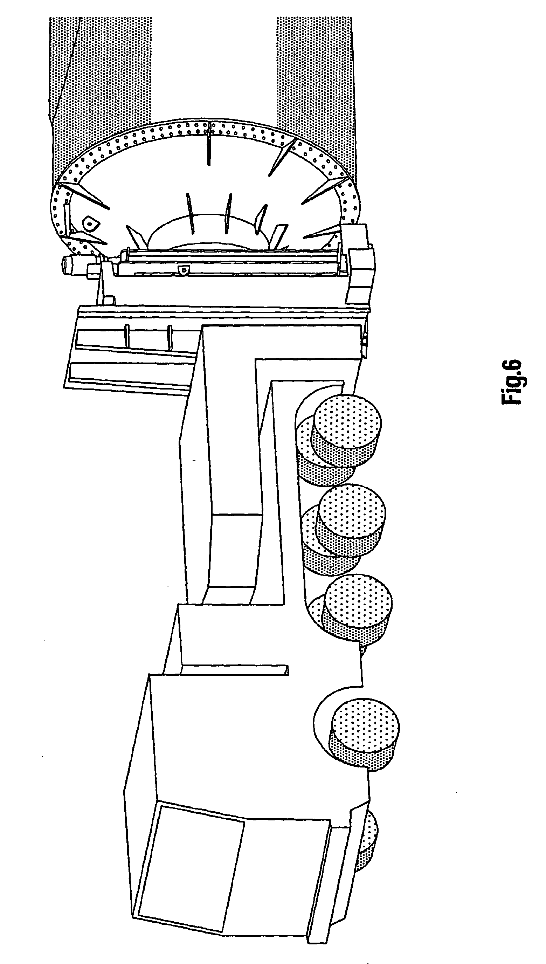

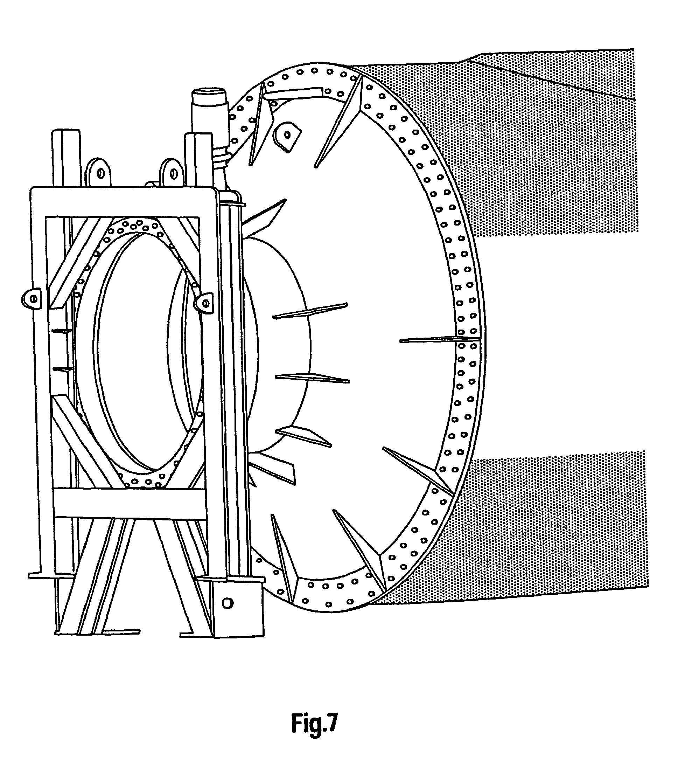

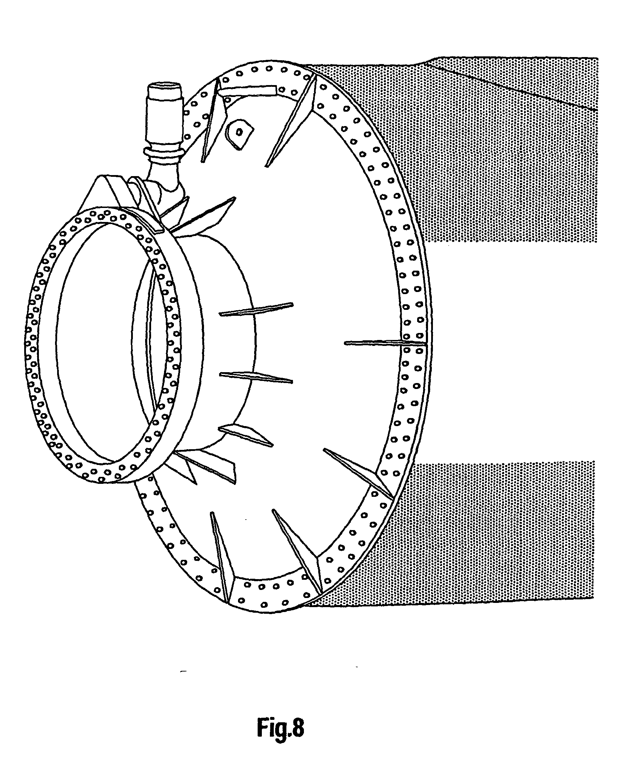

Figur 5 zeigt eine Ansicht des erfindungsgemäßen Nachläufers, Figur 6 zeigt eine Ansicht der Zugmaschine der erfindungsgemäßen Transporteinrichtung mit der Haltevorrichtung zur Aufnahme des Rotorblattes bzw. der Rotorblattwurzel. Da der Durchmesser (mehr als 2 m) des Rotorblattes sehr groß ist, ist zwischen der Haltevorrichtung der Zugmaschine und dem Rotorblatt selbst ein Zwischenstück (Adapter) angebracht, welches in der Figur 7 und 8 gut zu erkennen ist. Dort ist auch zu erkennen, dass das Zwischenstück einen Drehantrieb und ein entsprechendes Drehlager aufweist.

Mit der dem Rotorblatt abgewandten Seite ist das Zwischenstück an einem Haltegestell der Zugmaschine befestigt.

Die auf dem Nachläufer befindliche Haltevorrichtung ist ihrerseits drehbar gelagert und folgt bei Verdrehung des Rotorblattes mittels des Drehantriebs an dem Zwischenstück. Im Bedarfsfall kann auch die Haltevorrichtung auf dem Nachläufer eine entsprechend mit der Drehvorrichtung der Zugmaschine koordinierte gesteuerte Drehvorrichtung aufweisen.

Die Haltevorrichtung auf dem Nachläufer ist dem jeweiligen Profil des Rotorblattes an der entsprechenden zu haltenden Stelle angepasst und zur Arretierung des Rotorblattes kann dieses ein oder mehrere Durchlässe aufweisen, die von entsprechenden Haltebolzen der Haltevorrichtung des Nachläufers durchsetzt werden, so dass unter keinen Umständen das Rotorblatt von der Haltevorrichtung des Nachläufers abrutschen kann.

Wie weiter zu erkennen, ist die am Nachläufer vorgesehene Haltevorrichtung ihrerseits wiederum drehbar gelagert, so dass das Durchfahren von Kurven einfacher gestaltet ist.

Darüber hinaus ist das erfindungsgemäße Transportfahrzeug mit Warnvorrichtungen versehen (nicht dargestellt) die eine eventuelle Kollision des transportierenden Stückgutes mit einer fahrbaren Begrenzung (zur Seite unten oder oben) feststellen und dann in einer solchen Kollisionsgefahr an das Fahrerhaus melden, so dass der Fahrer des Transports rechtzeitig für eine Verschwenkung des Stückgutes sorgen kann, so dass dann eine Kollision des Stückgutes mit einer Fahrbahnprofilbegrenzung nicht mehr möglich ist.

Die Verdrehung des Stückgutes kann im Stillstand des Fahrzeugs aber auch bei langsamer oder mittlerer Fahrt des Fahrzeugs erfolgen.

Auch ist es ohne Weiteres möglich, dass das Fahrbahndurchgangsprofil von Straßen vermessen wird und dies entsprechend so programmiert oder in einer Datenbank gespeichert wird, dass immer dann, wenn die Stückguthöhe während des Transports für das Durchfahren eines Hindernisses zu groß ist, automatisch eine entsprechende Schwenkung in die Seitenlage ausgelöst oder im Fahrzeuglenker angezeigt wird, so dass dieser die Drehung des Stückgutes auslösen kann.

## Patentansprüche

1. Transportfahrzeug für Stückgut, mit einer Zugmaschine und einem Nachläufer, die während des Tansportes durch das Stückgut miteinander verbunden sind und die jeweils eine Halte- und/oder Aufnahmevorrichtung für das Stückgut aufweisen, **dadurch gekennzeichnet, dass** das Stückgut ein Rotorblatt einer Windenergieanlage ist, und dass die Halte- und/oder Aufnahmevorrichtungen so ausgebildet sind, dass sie eine Verdrehung des Rotorblattes um die eigene Längsachse erlauben und dass an der Zugmaschine und/oder dem Nachläufer ein Antrieb zur Verdrehung des Rotorblattes vorgesehen ist.

2. Transportfahrzeug nach Anspruch 1,
**dadurch gekennzeichnet, dass** die der Zugmaschine zugeordnete Haltevorrichtung ein Zwischenstück aufnimmt, welches zwischen dem Rotorblatt und der Haltevorrichtung liegt.

3. Transportfahrzeug nach einem der vorhergehenden Ansprüche,
**dadurch gekennzeichnet, dass** die dem Nachläufer zugehörende Haltevorrichtung aus einer drehbaren Aufnahme besteht.

4. Transportfahrzeug nach einem der vorhergehenden Ansprüche,
**dadurch gekennzeichnet, dass** die dem Nachläufer zugeordnete Haltevorrichtung Mittel zur Arretierung des Rotorblattes aufweist und diese Mittel das Rotorblatt durchsetzen.

## Claims

1. Transport vehicle for piece goods, having a tractor and a trailer which are connected to each other by the piece goods item during transport and which each have a holding and/or receiving device for the piece goods item,
**characterised in that** the piece goods item is a rotor blade of a wind power installation, and the holding and/or receiving devices are so constructed that they permit a rotation of the rotor blade about its longitudinal axis, and a drive for rotating the rotor blade is provided on the tractor and/or the trailer.

2. Transport vehicle according to claim 1,
**characterised in that** the holding device associated with the tractor receives an intermediate piece which is situated between the rotor blade and the holding device.

3. Transport vehicle according to one of the preceding claims,
**characterised in that** the holding device belonging to the trailer consists of a rotatable holding fixture.

4. Transport vehicle according to one of the preceding claims,
**characterised in that** the holding device associated with the trailer has means for arresting the rotor blade and those means extend through the rotor blade.

## Revendications

1. Véhicule de transport pour des charges individuelles, comprenant un véhicule tracteur et un porteur trainé, qui pendant le transport sont reliés l'un à l'autre par la charge individuelle, et comportent chacun un dispositif de support et/ou un montage-récepteur pour la charge individuelle,
**caractérisé en ce que** la charge individuelle est une pale de rotor d'une installation éolienne, et **en ce que** les dispositifs de support et/ou les montages-récepteurs sont conçus de façon à permettre une rotation de la pale de rotor autour de son propre axe longitudinal, et **en ce que** sur le véhicule tracteur et/ou sur le porteur trainé est prévu un entraînement pour faire tourner la pale de rotor.

2. Véhicule de transport selon la revendication 1,
**caractérisé en ce que** le dispositif de support associé au véhicule tracteur reçoit une pièce intermédiaire qui se situe entre la pale de rotor et le dispositif de support.

3. Véhicule de transport selon l'une des revendications précédentes,
**caractérisé en ce que** le dispositif de support associé au porteur trainé est constitué d'un montage-récepteur rotatif.

4. Véhicule de transport selon l'une des revendications précédentes,
**caractérisé en ce que** le dispositif de support associé au porteur trainé comprend des moyens pour le blocage de la pale de rotor, et ces moyens traversent la pale de rotor.
